# EUROPÄISCHE PATENTSCHRIFT

(11) **EP 2 099 163 B1**
(45) Veröffentlichungstag und Bekanntmachung des Hinweises auf die Patenterteilung: **06.07.2011**
(21) Anmeldenummer: 08102223.8
(22) Anmeldetag: 03.03.2008
(51) Int. Cl.: H04L 12/40, G06F 11/20, H04L 12/28

(54) **Redundantes Feldbussystem**
Redundant field bus system
Système de bus de terrain redondant

(43) Veröffentlichungstag der Anmeldung: 09.09.2009
(73) Patentinhaber: SICK AG, 79183 Waldkirch (DE)
(72) Erfinder: Moddemann, Jörg, 79350, Sexau (DE); Weddingfeld, Klaus, 79183, Waldkirch (DE); Koepcke, Oliver, 79395, Neuenburg (DE)
(74) Vertreter: Hehl, Ulrich

(56) Entgegenhaltungen:
- EP-A- 0 837 394
- EP-A- 1 179 908
- DE-C1- 19 906 867

## Beschreibung

Die Erfindung betrifft eine modulare Sicherheitsvorrichtung und ein Sicherheitsverfahren zur sicheren Abschaltung von eine Gefahrenquelle bildenden angeschlossenen Aktoren nach dem Oberbegriff von Anspruch 1 beziehungsweise 7.

Sicherheitsschaltgeräte dienen dazu, bei Anliegen eines Gefahrensignals fehlerfrei auf eine vorgegebene Art zu reagieren. Eine Sicherheitsvorrichtung ist ein System mit einer Sicherheitssteuerung und Anschlüssen für Ausgänge, die sicher abgeschaltet werden können. Sie kann also ein Sicherheitsschaltgerät sein, aber auch darüber hinaus andere Ausgänge als nur Schaltausgänge erzeugen: Eine typische Anwendung der Sicherheitstechnik ist die Absicherung gefährlicher Maschinen, wie etwa Pressen oder Roboter, die sofort abgeschaltet oder abgesichert werden müssen, wenn sich Bedienpersonal in unerlaubter Weise nähert. Dazu ist ein Sensor vorgesehen, der die Annäherung erkennt, wie etwa ein Lichtgitter oder eine Sicherheitskamera. Erkennt ein solcher Sensor eine Gefährdung, so muss eine ihm nachgeordnete Schaltung absolut zuverlässig ein Abschaltsignal generieren.

In der Praxis überwacht zumeist nicht ein einzelner Sensor eine einzelne Maschine, sondern es müssen eine ganze Reihe von Gefährdungsquellen überwacht werden. Die entsprechende Vielzahl zugehöriger Sensoren, die jeweils ein Schaltereignis definieren können und geeigneter Maßnahmen zur Beseitigung von Gefährdungen muss dann in dem Sicherheitsschaltgerät konfiguriert und verschaltet werden.

Damit das Sicherheitsschaltgerät flexibel für die unterschiedlichsten denkbaren Konfigurationen von Sensoren und Aktoren in industriellen Anlagen angepasst werden kann, ist beispielsweise aus der DE 100 200 75 C2 bekannt, Modulreihen aus Eingangsmodulen und Ausgangsmodulen zu bilden, welche also jeweils einen oder mehrere Eingänge oder einen oder mehrere Ausgänge aufweisen. Je nach benötigter Anzahl von Eingängen und Ausgängen kann die Modulreihe erweitert werden. Steuerinformationen werden dabei von einer zentralen Steuereinheit, die selbst als eigenes Steuerungsmodul ausgebildet sein kann, über eine serielle Kommunikation ausgetauscht, häufig einen sogenannten Rückwandbus ("Backplane"). Die Module besitzen dafür Steuerelemente, damit ihre Eingänge und Ausgänge an dem Datenaustausch der Buskommunikation teilnehmen können.

Der Bus und die Steuerelemente der einzelnen Module sind für ein bestimmtes Kommunikationsprotokoll ausgelegt. Wenn nun zu einem späteren Zeitpunkt eine Änderung der Datenübertragung erforderlich ist, etwa durch neuartige Sensoren mit höherem Datenaufkommen, steht dieses festgelegte Kommunikationsprotokoll einer Erweiterung der Modulreihe entgegen.

Nun wäre denkbar, die Module aufzurüsten, so dass sie mit einem neuen, mächtigeren Kommunikationsprotokoll umgehen können. Es ist aber gerade in der Sicherheitstechnik nicht erwünscht, ein funktionsfähiges System zu verändern. Über die üblichen Tests zur Sicherstellung der Funktionsfähigkeit nach Veränderung eines technischen Systems hinaus muss nämlich in der Praxis auch noch eine Zertifizierung etwa von einer staatlichen Überwachungsstelle nach einer Sicherheitsnorm erfolgen, damit die Module und die Anlage weiter betrieben werden dürfen.

Alternativ könnte man neue Module einfügen, welche das neue Kommunikationsprotokoll beherrschen. Sind diese neuen Module aber an den vorhandenen Bus angeschlossen, so werden die alten Module durch den Datenaustausch mittels des neuen Kommunikationsprotokolls verwirrt, sie verlieren ihre Synchronisation oder missinterpretieren die Signale, welche sie mit ihrem unpassenden Kommunikationsprotokoll anzunehmen versuchen. Die Modulreihe ist dann nicht mehr funktionsfähig.

Somit impliziert diese Alternative zumindest eine Umrüstung der alten Module bis zu einem minimalen Verständnis des neuen Kommunikationsprotokolls dahingehend, dass sie Kommunikation auf Basis des neuen Kommunikationsprotokoll ignorieren können. Wie bei Umrüstung auf das vollständige neue Kommunikationsprotokoll muss dann eine erneute Zertifizierung erfolgen. Um die Umrüstung zu verhindern, könnte man die neuen Module auch mittels einer redundanten Übertragungsphysik anschließen, also insbesondere einem zweiten Bus. Dies bedeutet aber einen ganz erheblichen Mehraufwand.

Selbst wenn man den Mehraufwand und die erneute Zertifizierung in Kauf nimmt, so bleibt das System unflexibel, denn es stellt sich dasselbe soeben beschriebene Problem immer dann erneut, wenn das mächtigere Kommunikationsprotokoll erweitert oder geändert wird. Obwohl also das bestehende System in seinen Teilaufgaben mit dem vorhandenen Bus und den alten Modulen eigentlich überhaupt keiner Anpassung bedarf, müssen diese alten Module jedes Mal aufwändig umgerüstet werden, um die Kompatibilität zu wahren.

Die EP 0 837 394 A2 beschreibt ein ausfallsicheres serielles Bussystem, bei dem sich Teilnehmer gegenseitig prüfen, indem Fehler anzeigende oder ausbleibende Statusmeldungen erkannt werden und gegebenenfalls das Bussystem in einen einem Sicherheitskriterium entsprechenden Zustand versetzt wird.

Es ist bekannt, beispielsweise aus der Computer- oder Mobilfunktechnik, einen Kommunikationspfad durch zeitliches Multiplexing mehrfach auszunutzen. Dieses Verfahren lässt sich aber auf die beschriebene Situation bei Sicherheitsschaltgeräten schon deshalb nicht ohne Weiteres übertragen, weil die alten Module für ein Multiplexing nicht ausgebildet sind. Die Umrüstung der alten Module auf ein Multiplexverfahren erfordert einen vergleichbaren Aufwand zu der Umrüstung auf das neue Kommunikationsprotokoll; genau genommen kann man die Möglichkeit des Multiplexings auch als Teil eines Kommunikationsprotokolls verstehen, so dass dies nur eine Beschreibung desselben Problems in anderen Worten ist.

Es ist daher Aufgabe der Erfindung, in einem herkömmlichen Sicherheitsschaltsystem der genannten Art ohne Eingriff in bestehende Module neue Möglichkeiten für den Datenaustausch einzuführen.

Diese Aufgabe wird durch eine modulare Sicherheitsschaltvorrichtung gemäß Anspruch 1 und 7 Sicherheitsschaltverfahren gemäß Anspruch 7 gelöst.

Dabei geht die erfindungsgemäße Lösung von dem Prinzip aus, die alten Module, also Anschlussmodule des ersten Typs, zumindest hinsichtlich der für die serielle Kommunikation oder den Rückwandbus relevanten Eigenschaften oder sogar insgesamt unverändert zu lassen und neue Module einzufügen, welche das zweite Kommunikationsprotokoll beherrschen, mit ihrer Kommunikation aber die vorhandene serielle Kommunikationseinrichtung bestehen lassen.

Daraus ergibt sich der Vorteil, dass die Anschlussmodule des ersten Typs weiterverwendet werden können und vor allem nicht neu zertifiziert werden müssen. Die Sicherheitsschaltvorrichtung kann flexibel an Veränderungen angepasst werden, welche die Einführung eines neuen Kommunikationsprotokolls oder dessen Veränderung erfordern, während die Anschlussmodule des ersten Typs unverändert bleiben und noch nicht einmal aus der vorhandenen Installation entfernt werden müssen. Mit der vorhandenen Übertragungsphysik, also der seriellen Kommunikationseinrichtung, können zwei unterschiedliche Kommunikationsprotokolle mit maximaler Rückwirkungsfreiheit zeitmultiplex betrieben werden. Dadurch wird eine Umrüstung und Anpassung der gesamten Sicherheitssteuerung kostengünstig, flexibel und schnell.

Das Anschlussmodul des zweiten Typs weist vorteilhafterweise ein Hardwarestellglied oder eine per Steuerbefehl schaltbare Weiche auf, mittels derer sich das Anschlussmodul des zweiten Typs alternierend in den ersten Zeitschlitzen in die serielle Kommunikationseinrichtung einklinken und in den zweiten Zeitschlitzen mit dem Steuerungsmodul verbinden kann. Damit ist das Anschlussmodul des zweiten Typs dafür ausgerüstet, die notwendigen Änderungen in der Modulreihe vorzunehmen, um das zweite Kommunikationsprotokoll zu etablieren. Ist das Anschlussmodul des zweiten Typs in die serielle Kommunikationseinrichtung eingeklinkt, so ist in Weiterbildung der Erfindung vorstellbar, dass das Anschlussmodul des zweiten Typs zugleich die Aufgabe eines Anschlussmoduls des ersten Typs wahrnimmt, also auch insbesondere für einen Datenaustausch mittels des ersten Kommunikationsprotokolls befähigt ist.

Bevorzugt ist das Anschlussmodul des zweiten Typs dafür ausgebildet, in den ersten Zeitschlitzen die eigene Kommunikation auf transparent zu schalten, also Datenpakete unverändert mittels der seriellen Kommunikationseinrichtung weiterzugeben und/oder in den zweiten Zeitschlitzen die serielle Kommunikation zu stromabwärts, also in Gegenrichtung zu derjenigen zu dem Steuerungsmodul, gelegenen Anschlussmodulen zu unterbrechen. Das Anschlussmodul des zweiten Typs lässt somit die Kommunikation mit dem ersten Kommunikationsprotokoll ungehindert passieren, so dass die etablierte, geprüfte und zertifizierte Kommunikation auf der seriellen Kommunikationseinrichtung weiterbesteht. Durch Unterbrechung der Kommunikation zu stromabwärts gelegenen Modulen wird in den zweiten Zeitschlitzen verhindert, dass die Anschlussmodule des ersten Typs durch Kommunikation mittels des für sie unverständlichen ersten Kommunikationsprotokolls verwirrt werden.

Das zweite Kommunikationsprotokoll ermöglicht vorteilhafterweise eine höhere Bandbreite als das erste Kommunikationsprotokoll und/oder die zweiten Zeitschlitze liegen in Zeitintervallen, welche von dem ersten Kommunikationsprotokoll nicht genutzt werden. Auf diese Weise können Anschlussmodule und daran angeschlossener Sensoren und Aktoren eingebunden werden, welche eine größere Datenmenge verarbeiten und verfügbar machen als solche Sensoren und Aktoren, für welche die Anschlussmodule des ersten Typs ausgelegt sind. Werden die zweiten Zeitschlitze in Zeitintervalle gelegt, in denen die Anschlussmodule des ersten Typs ohnehin nicht kommunizieren, so geht der Bandbreite der seriellen Kommunikationseinrichtung nichts verloren und die Kommunikation über das erste Kommunikationsprotokoll kann in derselben Weise fortgesetzt werden, als seien keine Anschlussmodule des zweiten Typs vorhanden.

Steuerungsmodul und Anschlussmodule sind in einer vorteilhaften Weiterbildung in einem insbesondere gleichartigen Gehäuse mit jeweils einem Stecker und einer Buchse zum Ineinanderstecken angeordnet und die Sicherheitsschaltvorrichtung bildet eine Modulreihe, und/oder das Anschlussmodul des zweiten Typs ist zwischen dem Steuerungsmodul und dem Anschlussmodul des ersten Typs angeordnet. Die mechanische Ausgestaltung durch gleichartige Gehäuse ermöglicht ein einheitliches Aussehen und ein einfaches Umbauen der Modulreihe. Die physische Anordnung des Anschlussmoduls des zweiten Typs direkt neben dem Steuerungsmodul ermöglicht eine Kommunikation mittels des zweiten Kommunikationsprotokolls auf kurzen Wegen und die vollständige Kontrolle über die stromabwärts gelegene Kommunikation auf der seriellen Kommunikationseinrichtung.

In vorteilhafter Weiterbildung der Erfindung sind ein oder mehrere weitere Anschlussmodule eines dritten oder weiteren Typs vorgesehen, welche Hardwarestellglieder oder per Steuerbefehl schaltbare Weichen aufweisen, um mittels des zweiten oder weiterer Kommunikationsprotokolle in den zweiten Zeitschlitzen mit dem Steuerungsmodul zu kommunizieren. Die Erfindung lässt sich also auf mehrere gleichartige oder unterschiedliche Module mit einem oder mehreren neuen Kommunikationsprotokollen verallgemeinern.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

In einer Weiterbildung des Sicherheitsschaltverfahrens für eine Modulreihe mit dem Anschlussmodul des ersten Typs und zusätzlichen Anschlussmodulen, nämlich dem Anschlussmodul des zweiten Typs und weiteren Anschlussmodulen des zweiten, eines dritten oder weiterer Typen, teilen sich die zusätzlichen Anschlussmodule die Kommunikation mit dem Steuerungsmodul in den zweiten Zeitschlitzen nach einem der folgenden Schemata:
- die zusätzlichen Anschlussmodule nutzen einen Teil der seriellen Kommunikationseinrichtung als eigene serielle Kommunikationseinrichtung, welche alle oder Teilgruppen der zusätzlichen Anschlussmodule verbindet und/oder
- jedes zusätzliche Anschlussmodul erhält zyklisch jeweils einen zweiten Zeitschlitz zugeteilt und/oder
- alle oder Teilgruppen der zusätzlichen Anschlussmodule teilen sich jeweils einen zweiten Zeitschlitz.

Je nachdem, welchen Datendurchsatz ein zusätzliches Anschlussmodul benötigt und wie viele zusätzliche Anschlussmodule die Anwendung verlangt, wird damit die Kommunikation flexibel an die Bedürfnisse angepasst.

Dabei kommunizieren besonders bevorzugt die zusätzlichen Anschlussmodule mittels des zweiten und/oder mittels weiterer Kommunikationsprotokolle. Viele Anwendungen können durch ein weiteres zweites Kommunikationsprotokoll oder dessen Erweiterungen zufriedenstellend bedient werden. Die Erfindung ist darüber hinaus aber auch in der Lage, mehr als ein zusätzliches Kommunikationsprotokoll zu etablieren.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: die schematische Darstellung einer ersten Ausführungsform eines erfin- dungsgemäßen Sicherheitsschaltgeräts;
- Fig. 2a-b: eine schematische Darstellung zur Erläuterung der unterschiedlichen Bandbreite bei Kommunikation über einen Bus gegenüber direkter Kom- munikation; und
- Fig. 3a-c: verschiedene Übertragungsschemata zur Ausnutzung des zweiten Zeit- schlitzes mit mehreren gleichartigen oder verschiedenartigen zusätzlichen Anschlussmodulen.

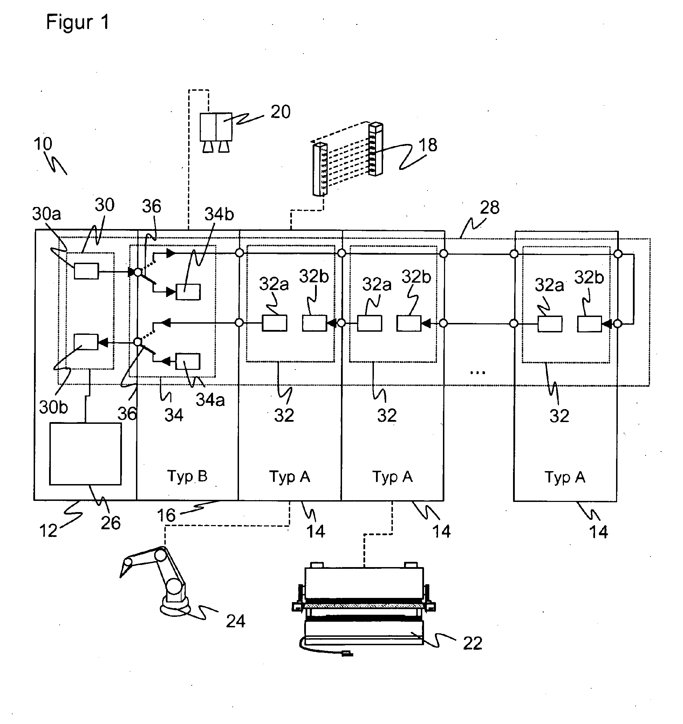

Figur 1 zeigt eine erste Ausführungsform eines erfindungsgemäßen Sicherheitsschaltgeräts 10 oder einer Sicherheitsvorrichtung mit einem Steuerungsmodul 12, einer Reihe von Anschlussmodulen 14 eines ernsten Typs A und einem Anschlussmodul 16 eines zweiten Typs B. Die Anschlussmodule 14, 16 weisen jeweils Eingänge zu Sensoren, hier beispielhaft ein Lichtgitter 18 und eine dreidimensionale Sicherheitskamera 20, und Ausgänge zu Aktoren auf, im Beispiel eine Abkantpresse 22 und ein Roboter 24. Diese Sensoren 18, 20 sind in der Lage, unzulässige Eingriffe in einen Schutzbereich zu erkennen, etwa durch Unterbrechung der Lichtstrahlen oder Abweichungen von einem Referenzbild und ein Abschaltsignal (OSSD, Output Switching Signal Device) auszugeben, welches über die Module 12, 14, 16 an die Aktoren 22, 24 ausgegeben wird, um eine Gefahrenquelle, etwa eine gefährliche Maschine 22 oder ein Roboter 24, abzuschalten oder in einen sicheren Zustand zu verbringen. Es ist denkbar, dedizierte Anschlussmodule 14, 16 vorzusehen, welche jeweils nur Eingänge oder nur Ausgänge aufweisen. Umgekehrt kann auch das Steuerungsmodul 12 bereits Eingänge und Ausgänge aufweisen und somit die kürzeste denkbare Modulreihe bilden.

Alternativ zu einem Lichtgitter 18 oder einer 3D-Kamera 20 können weitere Sicherheitssensoren beliebiger Art, wie Laserscanner, 2D-Kameras, Schaltmatten oder kapazitive Sensoren angeschlossen werden, aber auch sonstige Sensoren etwa zur Aufnahme von Messdaten oder einfache Schalter wie ein Not-Aus-Schalter. Auch weitere als die dargestellten Aktoren sind denkbar, und zwar sowohl solche, welche einen Gefahrenbereich erzeugen als auch andere, etwa eine Warnlampe, eine Sirene, eine Anzeige und dergleichen mehr.

Die Module 12, 14, 16 weisen jeweils gleichartige Gehäuse auf und können mittels Steckverbindungen, welche sowohl eine elektrische wie eine mechanische Verbindung schaffen, zu einer Modulreihe zusammengesetzt werden, welche das Sicherheitsschaltgerät 10 bildet.

Eine Sicherheitssteuerung 26 in dem Steuerungsmodul 12 als Kopf der Modulreihe empfängt Daten von den angeschlossenen Sensoren 18, 20, leitet deren Abschaltsignal weiter oder bestimmt nach einer vorgegebenen oder konfigurierten Logik die Abschaltung oder sonstige Ansteuerungen der Aktoren 22, 24. Die Sicherheitssteuerung 26 kann mittels eines Bedienelements oder einer Software, etwa per Notebook, PDA oder Mobiltelefon konfiguriert werden.

Zur Kommunikation zwischen der Sicherheitssteuerung 26 des Steuerungsmoduls 12 und den Anschlussmodulen 14, 16 ist ein Kommunikationsbus vorgesehen, welcher als Ganzes mit dem Bezugszeichen 28 bezeichnet ist. Der Bus 28 kann auf einem Feldbusprotokoll basieren, wie CAN, Profibus, oder IO-Link, oder daran angelehnt sein, aber auch einen proprietären Standard haben.

Damit das Sicherheitsschaltgerät 10 sicher ist, sind die Eingänge und/oder Ausgänge der Module 14, 16, die Sicherheitssteuerung 26 und der Bus 28 durch Maßnahmen wie zweikanalige Ausführung, durch diversitäre, redundante, selbstprüfende oder sonst sichere Auswertungen und Selbsttests fehlersicher ausgelegt. Entsprechende Sicherheitsanforderungen für die Steuerungskategorie sind in der Norm EN 954-1 bzw. ISO 13849 (performance level) festgelegt. Die damit mögliche Sicherheitsstufe und die weiteren Sicherheitsanforderungen an eine Anwendung sind in der Norm EN 61508 bzw. EN 62061 definiert.

Der Bus 28 wird von einem Busmaster 30 des Steuerungsmoduls 12 gesteuert. Diesem sind eine Vielzahl von Teilnehmern 32 der Anschlussmodule 14 des Typs A zugeordnet (Single-Master, Multiple-Slave-Kommunikation). Der Busmaster 30 weist jeweils eine Mikrosteuerung zum Senden 30a und zum Empfangen 30b auf, entsprechend hat auch jeder Teilnehmer 32 eine Mikrosteuerung zum Senden 32a und zum Empfangen 32b von Daten. Die Mikrosteuerungen können eigene Prozessoren, FPGAs, ASICs, PLDs, DSPs oder dergleichen sein. Jedes Modul 14 des Typs A entnimmt der Kommunikation auf dem Bus 28 Daten nach einem für die Kommunikation mit dem Steuerungsmodul 12 festgelegten Kommunikationsprotokoll oder legt entsprechend Daten für andere Module 14 oder für die Sicherheitssteuerung 26 auf den Bus 28.

Wird ein weiteres Modul 14 des Typs A in die Modulreihe eingefügt, so wird es ein weiterer Teilnehmer des Busses 28. Dabei ist die Sicherheitssteuerung 26 und der Busmaster 30 für eine Maximalzahl von beispielsweise zwölf angeschlossenen Modulen 14,16 ausgelegt.

Eine Besonderheit bildet das Anschlussmodul 16 vom Typ B, welches physisch zwischen dem Steuerungsmodul 12 und dem Anschlussmodul 14 vom Typ A angeordnet und in der Praxis häufig, nicht aber notwendig, im Zuge einer Erweiterung dort eingeschoben ist. Die Kommunikationsschnittstelle 34 des Anschlussmoduls 16 vom Typ B basiert auf einem anderen Kommunikationsprotokoll als der Bus 28. Das Anschlussmodul 16 vom Typ B kann beispielsweise ein Gatewaymodul sein, welches die Sicherheitsvorrichtung 10 mit einem Feldbus verbindet und daher möglicherweise besonders viele Daten, nämlich des Feldbusses, vom und zum Steuerungsmodul 12 übertragen soll. In Figur 1 ist ein Beispiel eines Anschlussmoduls 16 vom Typ B mit angeschlossener 3D-Kamera 20 als besonders komplexem Sensor dargestellt, welche eine größere Datenfülle verarbeiten muss. Beides sind nur Beispiele für den Bedarf an einem neuen Kommunikationsprötokoll und ebenso ist auch denkbar, eine 3D-Kamera 20 an ein Anschlussmodul 14 vom Typ A anzuschließen, zumal die vom Sensor 20 zu verarbeitende Datenmenge nicht unbedingt derjenigen entspricht, welche die Sicherheitssteuerung 26 erreicht: Selbst für die Anbindung der 3D-Kamera kann als einzige Kommunikation die Ausgabe eines binären Abschaltsignals ausreichen. Wenn auch bevorzugt das neue Kommunikationsprotokoll performanter oder mächtiger ist, also im Wesentlichen eine höhere Bandbreite aufweist, so sind auch andere Gründe für den Bedarf eines neuen Kommunikationsprotokolls denkbar, beispielsweise eine größere Zahl von Teilnehmern oder die Anpassung an einen zuvor nicht unterstützten Sensor oder Aktor.

Wie die Anschlussmodule 14 vom Typ A hat auch das Anschlussmodul 16 vom Typ B je eine oder eine gemeinsame Mikrosteuerung zum Senden 34a und Empfangen 34b von Daten. Diese Mikrosteuerung 34a, 34b nimmt aber nicht an dem Bus 28 teil, sondern kommuniziert direkt und mittels des eigenen, neuen Kommunikationsprotokolls mit dem Busmaster 30. Auch die Sicherheitssteuerung 26 und/oder der Busmaster 30 muss daher in der Lage sein, auf Basis des neuen Kommunikationsprotokolls Daten auszutauschen.

Die Kommunikation des Steuerungsmodus 12 mit Anschlussmodulen 14 vom Typ A über den Bus 28 erfolgt alternierend zu einer Kommunikation mit Anschlussmodulen 16 vom Typ B über die direkte Verbindung. Dazu sind Stellglieder 36 vorgesehen, also in Hard- oder Software abgebildete Schalter, welche zwischen einer mit einer durchgezogenen Linie dargestellten Stellung, in welcher die Sicherheitssteuerung 26 mit dem Anschlussmodul 16 vom Typ B über das neue Kommunikationsprotokoll kommuniziert, und einer mit einer gepunkteten Linie dargestellten Stellung wechseln können, in welcher die Sicherheitssteuerung 26 mit den Anschlussmodulen 14 vom Typ A und deren Kommunikationsprotokoll über den Bus 28 kommuniziert.

In den Zeitschlitzen, in denen die Stellglieder 36 in der gestrichelten Position den Bus 28 mit dem Steuerungsmodul 12 verbinden, ist die Kommunikationsschnittstelle 34 transparent geschaltet, leitet also Datenpakete in beide Richtungen unverändert auf dem Bus 28 weiter, ohne Daten zu entnehmen. In den damit abwechselnden Zeitschlitzen, in denen die Stellglieder 36 in der durchgezogenen Position die direkte Kommunikation mit dem Steuerungsmodul 12 erlauben, ist dagegen die Übertragungsphysik, also der Bus 28 zu den Anschlussmodulen 14 des Typs A unterbrochen, so dass die Teilnehmer 32 von der Kommunikation zwischen dem Steuerungsmodul 12 und dem Anschlussmodul 16 vom Typ B ausgeschlossen sind und nicht versuchen können, die Signale mit ihrem inkompatiblen Kommunikationsprotokoll zu entnehmen oder zu verändern und auf diese Weise ein Anschlussmodul 14, 16 in einen undefinierten Zustand zu versetzen.

Besonders elegant ist, mittels der Stellglieder 36 die Kommunikation mit dem Bus 28 nur in solchen Zeitintervallen zu unterbrechen, in denen nach dem bestehenden Kommunikationsprotokoll ohnehin keine Daten ausgetauscht werden, beispielsweise weil dieses Kommunikationsprotokoll vorsieht, Daten in Intervallen von 3 ms zu versenden, auf die jeweils eine Pause von 1 ms folgt.

In einer weiteren Ausführungsform der Erfindung kann ein Zwittermodul vorgesehen sein, welches sowohl die Funktionalität eines Moduls vom Typ A wie diejenige eines Moduls vom Typ B bietet. Anhand der Position in der Modulreihe, nämlich ob stromabwärts nur Module 14 vom Typ A und stromaufwärts nur das Steuerungsmodul 12 oder Module 16 vom Typ B vorhanden sind oder nicht, entscheidet dann das Zwittermodul, ob es als Modul vom Typ B arbeitet oder nicht. Eine andere Einsatzmöglichkeit für ein solches Zwittermodul ist, dass es sowohl die Rolle eines Anschlussmoduls vom Typ A als auch eines Anschlussmoduls vom Typ B ausfüllt, also je nach Stellung der Stellglieder 36 mit dem entsprechenden Kommunikationsprotokoll an der im aktuellen Zeitschlitz stattfindenden Kommunikation teilnimmt.

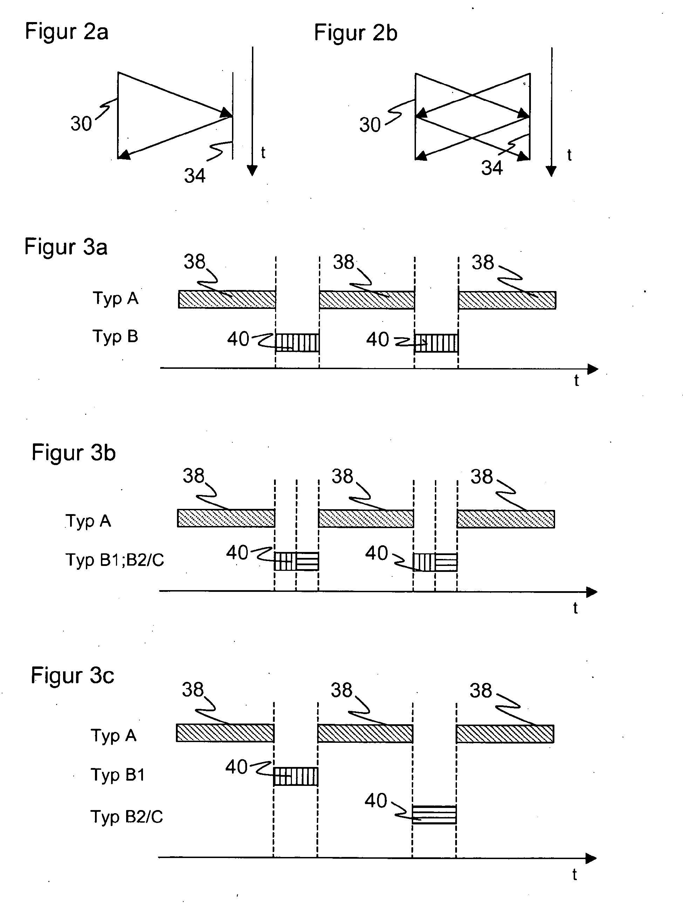

Die Kommunikation mittels des neuen Protokolls zwischen Steuerungsmodul 12 und Anschlussmodul 16 vom Typ B kann nach Art eines Busses oder direkt erfolgen. Im ersteren Fall können problemlos mehrere Anschlussmodule 16 vom Typ B eingebunden werden, dafür kann jeder Teilnehmer 34a, 34b beziehungsweise der Busmaster 30, wie in Figur 2a dargestellt, aber je Takt nur entweder senden oder empfangen. Bei direkter Kommunikation, die je Zeitschlitz nur mit einem einzigen Anschlussmodul 16 vom Typ B erfolgen kann, sendet und empfängt jeder Teilnehmer 34a, 34b beziehungsweise der Busmaster 30, wie in Figur 2b dargestellt, gleichzeitig in jedem Takt und verdoppelt damit die Bandbreite. Welches Kommunikationsschema das bessere ist, entscheidet also die Anwendung je nachdem, ob eher die Vielzahl an Anschlussmodulen 16 vom Typ B oder die Bandbreite Priorität genießt.

Verschiedene Schemata zur Aufteilung der Zeitschlitze für die Kommunikation zu einem bestimmten Modul werden nunmehr anhand der Figuren 3a-c erläutert. In Figur 3 entspricht das Kommunikationsschema der Situation, wie sie im Zusammenhang mit der Figur 1 erläutert worden ist. Die Anschlussmodule 14 vom Typ A kommunizieren über den Bus 28 in ersten Zeitschlitzen 38 alternierend zu dem Anschlussmodul 16 vom Typ B in zweiten Zeitschlitzen 40. Dabei können die ersten und zweiten Zeitschlitze konstante und insbesondere untereinander gleiche Länge haben, oder die Längen sind, wie Figur 3a dargestellt, an durch das festgelegte Protokoll der Anschlussmodule 14 von Typ A vorgegebene Längen der ersten Zeitschlitze gebunden. Die in Figur 3a dargestellte Aufteilung in Zeitschlitze ist auch für die Situation gültig, in denen mehrere Anschlussmodule 16 vom Typ B den vorhandenen Bus 28 in ihren Zeitschlitzen mit dem neuen Kommunikationsprotokoll betreiben.

In Figur 3b ist eine alternative Situation dargestellt, in denen der Busmaster 30 direkt mit mehreren Anschlussmodulen 16 vom Typ B kommuniziert, wobei nur zwei Anschlussmodule 16 vom Typ B dargestellt, aber weitere denkbar sind. Die Stellglieder 36 haben dann weitere Stellmöglichkeiten, so dass innerhalb des den Anschlussmodulen vom Typ B insgesamt zustehenden Zeitschlitzes 40 zwischen den mehreren Anschlussmodulen 16 vom Typ B gewechselt wird. Das ist nur sinnvoll, wenn der Overhead für das Multiplexing noch genügend Bandbreite für die erforderliche Datenmenge lässt, also die eigentliche Kommunikationszeit nicht zu kurz wird. Alternativ zu einer Umschaltung zwischen mehreren Anschlussmodulen 16 vom Typ B sind Anschlussmodule eines weiteren Typs C denkbar, welche ihr eigenes Kommunikationsprotokoll haben, das dann die Sicherheitssteuerung 26 und/oder der Busmaster 30 natürlich auch beherrschen muss.

Figur 3c schließlich stellt eine Alternative zu dem Schema der Figur 3b dar, bei welchem die zweiten Zeitschlitze 40 nicht aufgeteilt, sondern alternierend zugeteilt werden. Damit kann ein einzelnes einer Vielzahl von Anschlussmodulen 16 vom Typ B oder eines weiteren Typs C nach einem beispielsweise zyklischen Zuteilungsschema nicht in jedem Zeitschlitz 40 für die Kommunikation mittels der neuen Kommunikationsprotokolls Daten austauschen, dafür aber diejenigen Zeitschlitze 40, die zugeteilt werden, voll nutzen, so dass der Overhead reduziert ist.

## Patentansprüche

1. Modulare Sicherheitsvorrichtung (10) zur sicheren Abschaltung von eine Gefahrenquelle bildenden Aktoren (22, 24), welche ein Steuerungsmodul (12) mit einer zentralen Sicherheitssteuerung (26), mindestens ein Anschlussmodul (14) eines ersten Typs mit Eingängen für den Anschluss von Sensoren (18, 20) und/oder Ausgängen für den Anschluss von Aktoren (22, 24) sowie eine serielle Kommunikationseinrichtung (28) zum Datenaustausch zwischen Steuerungsmodul (12) und Anschlussmodul (14) basierend auf einem ersten Kommunikationsprotokoll aufweist, insbesondere einen Bus,
**dadurch gekennzeichnet,**
**dass** mindestens ein weiteres Anschlussmodul (16) eines zweiten Typs vorgesehen ist, welches als Gatewaymodul ausgebildet ist und/oder Eingänge für den Anschluss von Sensoren (18, 20) und/oder Ausgänge für den Anschluss von Aktoren (22, 24) aufweist, wobei eine Kommunikationsschnittstelle (34) des zweiten Anschlussmoduls (16) vorgesehen ist, welche Datenpakete auf der seriellen Kommunikationseinrichtung (28) weiterleiten kann, dass das Anschlussmodul (16) des zweiten Typs und das Steuerungsmodul (12) für einen Datenaustausch basierend auf einem zweiten Kommunikationsprotokoll ausgebildet sind, und dass die Sicherheitssteuerung (26) abwechselnd in ersten Zeitschlitzen (38) Daten über das erste Kommunikationsprotokoll mit den Anschlussmodulen (14) des ersten Typs und in zweiten Zeitschlitzen (40) über das zweite Kommunikationsprotokoll mit den Anschlussmodulen (16) des zweiten Typs austauschen kann.

2. Sicherheitsvorrichtung (10) nach Anspruch 1,
wobei das Anschlussmodul (16) des zweiten Typs ein Hardwarestellglied (36) oder eine per Steuerbefehl schaltbare Weiche aufweist, mittels derer sich das Anschlussmodul (16) des zweiten Typs alternierend in den ersten Zeitschlitzen (38) in die serielle Kommunikationseinrichtung (28) einklinken und in den zweiten Zeitschlitzen (40) mit dem Steuerungsmodul (12) verbinden kann.

3. Sicherheitsvorrichtung (10) nach Anspruch 1 oder 2,
wobei das Anschlussmodul (16) des zweiten Typs dafür ausgebildet ist, in ersten Zeitschlitzen (38) die eigene Kommunikation auf transparent zu schalten, also Datenpakete unverändert mittels der seriellen Kommunikationseinrichtung (28) weiterzugeben, und/oder in zweiten Zeitschlitzen (40) die serielle Kommunikation (28) zu stromabwärts, also in Gegenrichtung zu derjenigen zu dem Steuerungsmodul (12), gelegenen Anschlussmodulen (14) zu unterbrechen.

4. Sicherheitsvorrichtung (10) nach einem der vorhergehenden Ansprüche, wobei das zweite Kommunikationsprotokoll eine höhere Bandbreite ermöglicht als das erste Kommunikationsprotokoll und/oder wobei die zweiten Zeitschlitze (40) in Zeitintervallen liegen, welche von dem ersten Kommunikationsprotokoll nicht genutzt werden.

5. Sicherheitsvorrichtung (10) nach einem der vorhergehenden Ansprüche, wobei Steuerungsmodul (12) und Anschlussmodule (14, 16) in einem insbesondere gleichartigen Gehäuse mit jeweils einem Stecker und einer Buchse zum Ineinanderstecken angeordnet sind und die Sicherheitsschaltvorrichtung (10) eine Modulreihe bildet, und/oder wobei das Anschlussmodul (16) des zweiten Typs zwischen dem Steuerungsmodul (12) und dem Anschlussmodul (14) des ersten Typs angeordnet ist.

6. Sicherheitsvorrichtung (10) nach einem der vorhergehenden Ansprüche, wobei ein oder mehrere weitere Anschlussmodule eines dritten oder weiteren Typs vorgesehen sind, welche Hardwarestellglieder oder per Steuerbefehl schaltbare Weichen aufweisen, um mittels des zweiten oder weiterer Kommunikationsprotokolle in den zweiten Zeitschlitzen (40) mit dem Steuerungsmodul (12) zu kommunizieren.

7. Sicherheitsverfahren zur sicheren Abschaltung von eine Gefahrenquelle bildenden Aktoren (22, 24) mittels einer modularen Sicherheitsschaltvorrichtung (10), wobei ein Steuerungsmodul (12) der Sicherheitsschaltvorrichtung (10) mit mindestens einem Anschlussmodul (14) eines ersten Typs, welches Eingänge für den Anschluss von Sensoren (18, 20) und/oder Ausgänge für den Anschluss von Aktoren (22, 24) aufweist, mittels einer seriellen Kommunikationseinrichtung (28), insbesondere eines Busses, Daten basierend auf einem ersten Kommunikationsprotokoll austauscht,
**dadurch gekennzeichnet,**
**dass** das Steuerungsmodul (12) abwechselnd in ersten Zeitschlitzen (38) Daten über das erste Kommunikationsprotokoll mit den Anschlussmodulen (14) des ersten Typs und in zweiten Zeitschlitzen (40), die insbesondere von dem ersten Kommunikationsprotokoll ungenutzt bleiben, über ein zweites Kommunikationsprotokoll insbesondere einer höheren Bandbreite als das erste Kommunikationsprotokoll mit Anschlussmodulen (16) eines zweiten Typs austauscht, wobei das Anschlussmodul des zweiten Typs als Gatewaymodul ausgebildet ist und/oder Eingänge für den Anschluss von Sensoren (18, 20) und/oder Ausgänge für den Anschluss von Aktoren (22, 24) aufweist und eine Kommunikationsschnittstelle (34) des zweiten Anschlussmoduls (16) vorgesehen ist, welche Datenpakete auf der seriellen Kommunikationseinrichtung (28) weiterleiten kann.

8. Sicherheitsverfahren nach Anspruch 7,
wobei sich das Anschlussmodul (16) des zweiten Typs alternierend in den ersten Zeitschlitzen (38) in die serielle Kommunikationseinrichtung (28) einklinkt und die eigene Kommunikation auf transparent schaltet, also Datenpakete auf der seriellen Kommunikationseinrichtung (28) unverändert weitergibt und in zweiten Zeitschlitzen (40) mit dem Steuerungsmodul (12) verbindet und dabei die serielle Kommunikationseinrichtung (28) nach stromabwärts unterbricht, also in Gegenrichtung zu derjenigen zu dem Steuerungsmodul (12).

9. Sicherheitsverfahren nach Anspruch 7 oder 8 für eine Modulreihe mit dem Anschlussmodul (14) des ersten Typs und zusätzlichen Anschlussmodulen, nämlich dem Anschlussmodul (16) des zweiten Typs und weiteren Anschlussmodulen des zweiten, eines dritten oder weiterer Typen, wobei sich die zusätzlichen Anschlussmodule die Kommunikation mit dem Steuerungsmodul (12) in den zweiten Zeitschlitzen (40) nach einem der folgenden Schemata teilen:
- die zusätzlichen Anschlussmodule nutzen einen Teil der seriellen Kommunikationseinrichtung (28) als eigene serielle Kommunikationseinrichtung, welche alle oder Teilgruppen der zusätzlichen Anschlussmodule verbindet und/oder
- jedes zusätzliche Anschlussmodul erhält zyklisch jeweils einen zweiten Zeitschlitz (40) zugeteilt und/oder
- alle oder Teilgruppen der zusätzlichen Anschlussmodule teilen sich jeweils einen zweiten Zeitschlitz (40).

10. Sicherheitsverfahren nach Anspruch 9,
wobei die zusätzlichen Anschlussmodule mittels des zweiten und/oder mittels weiterer Kommunikationsprotokolle kommunizieren.

## Claims

1. A modular safety device (10) for the safe deactivation of actuators (22, 24) which form a hazard source, said safety device having a control module (12) with a central safety controller (26), at least one connector module (14) of a first type with inputs for the connection of sensors (18, 20) and/or outputs for the connection of actuators (22, 24) as well as a serial communications device (28) for the exchange of data between the control module (12) and the connector module (14) based on a first communications protocol, in particular a bus,
**characterized in that**
at least one further connector module (16) of a second type is provided that is made as a gateway module and/or has inputs for the connection of sensors (18, 20) and/or outputs for the connection of actuators (22, 24), wherein a communications interface (34) of the second connector module (16) is provided that can forward data packets on the serial communications device (28); **in that** the connector module (16) of the second type and the control module (12) are made for an exchange of data on the basis of a second communications protocol; and **in that** the safety controller (26) can exchange data alternately with the connector modules (14) of the first type in first time slots (38) over the first communications protocol and with the connector modules (16) of the second type in second time slots (40) over the second communications protocol.

2. A safety device (10) in accordance with claim 1,
wherein the connector module (16) of the second type has a hardware actuator (36) or a switch which can be switched by a control command by means of which the connector module (16) of the second type can be integrated alternatingly into the serial communications device (28) in the first time slots (28) and can connect to the control module (12) in the second time slots (40).

3. A safety device (10) in accordance with claim 1 or 2,
wherein the connector module (16) of the second type is made to switch its own communication to transparent in first time slots (38), that is to transfer data packets onward unchanged by means of the serial communications device (28), and/or to interrupt the serial communication (28) to connector modules (14) disposed downstream in second time slots (40), that is in the opposite direction to that to the control module (12).

4. A safety device (10) in accordance with any of the preceding claims,
wherein the second communications protocol allows a higher bandwidth than the first communications protocol; and/or wherein the second time slots (40) lie in time intervals which are not utilized by the first communications protocol.

5. A safety device (10) in accordance with any of the preceding claims,
wherein the control module (12) and the connector modules (14, 16) are arranged in a housing, in particular a housing of the same type, having a respective plug and a respective socket for plugging into one another; and wherein the safety switching device (10) forms a module series; and/or wherein the connector module (16) of the second type is arranged between the control module (12) and the connector module (14) of the first type.

6. A safety device (10) in accordance with any of the preceding claims,
wherein one or more further connector modules of a third type or of a further type are provided which have hardware actuators or switches which can be switched by a control command to communicate with the control module (12) by means of the second or further communications protocol in the second time slots (40).

7. A safety method for the safe deactivation of actuators (22, 24) forming a hazard source by means of a modular safety deactivation device (10), wherein a control module (12) of the safety switching device (10) exchanges data based on a first communications protocol with at least one connector module (14) of a first type, having inputs for the connection of sensors (18, 20) and/or outputs for the connection of actuators (22, 24), by means of a serial communications device (28), in particular of a bus,
**characterized in that**
the control module (12) alternatingly exchanges data with the connector modules (14) of the first type over the first communications protocol in first time slots (38) and with connector modules (16) of a second type over a second communications protocol, in particular of a higher bandwidth than the first communications protocol, in second time slots (40) which in particular remain unused by the first communications protocol, wherein the connector module of the second type is made as a gateway module and/or has inputs for the connection of sensors (18, 20) and/or outputs for the connection of actuators (22, 24), and wherein a communications interface (34) of the second connector module (16) is provided that can forward data packets on the serial communications device (28).

8. A safety method in accordance with claim 7,
wherein the connector module (16) of the second type is alternatingly integrated into the serial communications device (28) in the first time slots (38) and switches its own communication to transparent, that is forwards data packets unchanged on the serial communications device (28) and connects to the control module (12) in second time slots and in so doing interrupts the serial communications device (28) to downstream, that is in the opposite direction to that to the control module (12).

9. A safety method in accordance with claim 7 or 8 for a module series having the connector module (14) of the first type and having additional connector modules, namely the connector module (16) of the second type and further connector modules of the second type, of a third type or of further types, wherein the additional connector modules share the communication with the control module (12) in the second time slots (40) in accordance with one of the following schemes:
- the additional connector modules utilize a part of the serial communications device (28) as a separate serial communications device which connects all or part groups of the additional connector modules; and/or
- each additional connector module has a respective second time slot (40) assigned cyclically; and/or
- all or part groups of the additional connector modules share a respective second time slot (40).

10. A safety method in accordance with claim 9,
wherein the additional connector modules communicate by means of the second communications protocol and/or by means of further communications protocols.

## Revendications

1. Dispositif de sécurité modulaire (10) pour une coupure sûre d'actionneurs (22, 24) formant une source de danger, qui comprend un module de commande (12) avec une commande de sécurité centralisée (26), au moins un module de raccordement (14) d'un premier type avec des entrées pour le raccordement de capteurs (18, 20) et/ou des sorties pour le raccordement d'actionneurs (22, 24), ainsi qu'un système de communication série (28) pour l'échange de données entre le module de commande (12) et le module de raccordement (14) en se basant sur un premier protocole de communication, en particulier un bus,
**caractérisé en ce que**
il est prévu au moins un autre module de raccordement (16) d'un second type, qui est réalisé sous forme de module passerelle ("gateway") et/ou qui comprend des entrées pour le raccordement de capteurs (18, 20) et/ou des sorties pour le raccordement d'actionneurs (22, 24), dans lequel il est prévu une interface de communication (34) du second module de raccordement (16), laquelle est capable de transférer des paquets de données vers le système de communication série (28),
**en ce que** le module de raccordement (16) du second type et le module de commande (12) sont réalisés pour un échange de données en se basant sur un second protocole de communication, et
**en ce que** la commande de sécurité (26) est capable d'échanger des données en alternance pendant des premières fenêtres temporelles (38) via le premier protocole de communication avec les modules de raccordement (14) du premier type, et pendant des secondes fenêtres temporelles (40) via le second protocole de communication avec les modules de raccordement (16) du second type.

2. Dispositif de sécurité (10) selon la revendication 1,
dans lequel le module de raccordement (16) du second type comprend un organe de positionnement matériel (36) ou un répartiteur capable d'être commuté par un ordre de commande, au moyen duquel le module de raccordement (16) du second type est capable alternativement de se brancher dans le système de communication série (28) pendant les premières fenêtres temporelles (38), et de se connecter avec le module de commande (12) pendant les secondes fenêtres temporelles (40).

3. Dispositif de sécurité (10) selon la revendication 1 ou 2,
dans lequel le module de raccordement (16) du second type est réalisé pour commuter dans des premières fenêtres temporelles (38) la propre communication vers un mode transparent, c'est-à-dire de transmettre des paquets de données sans modification au moyen du système de communication série, et/ou d'interrompre dans les secondes fenêtres temporelles (40) la communication série (28) vers des modules de raccordement (14) disposés en aval, donc en directions opposées à ceux du module de commande (12).

4. Dispositif de sécurité (10) selon l'une des revendications précédentes,
dans lequel le second protocole de communication permet une largeur de bande plus élevée que le premier protocole de communication, et/ou dans lequel les secondes fenêtres temporelles (40) sont situées dans des intervalles temporels qui ne sont pas utilisés par le premier protocole de communication.

5. Dispositif de sécurité (10) selon l'une des revendications précédentes,
dans lequel le module de commande (12) et les modules de raccordement (14, 16) sont agencés dans un boîtier, en particulier de même type, avec chacun une fiche mâle et une fiche femelle destinées à l'enfichage mutuel, et le dispositif de commutation de sécurité (10) forme une rangée modulaire, et/ou dans lequel le module de raccordement (16) du second type est agencé entre le module de commande (12) et le module de raccordement (14) du premier type.

6. Dispositif de sécurité (10) selon l'une des revendications précédentes, dans lequel sont prévus un ou plusieurs autres modules de raccordement d'un troisième type ou encore d'un autre type, lesquels comprennent des organes de positionnement matériels ou des répartiteurs commutables par des ordres de commande, afin de communiquer avec le module de commande (12) au moyen du second protocole de communication ou encore d'un autre protocole de communication dans les secondes fenêtres temporelles (40).

7. Procédé de sécurité pour la coupure sûre d'actionneurs (22, 24) formant une source de danger, au moyen d'un dispositif de commutation de sécurité modulaire (10), dans lequel un module de commande (12) du dispositif de commutation de sécurité (10) échange des données, en se basant sur un premier protocole de communication, avec au moins un module de raccordement (14) d'un premier type, qui comprend des entrées pour le raccordement de capteurs (18, 20) et/ou des sorties pour le raccordement d'actionneurs (22, 24), au moyen d'un système de communication série (28), en particulier d'un bus, **caractérisé en ce que**
le module de commande (12) échange des données alternativement dans des premières fenêtres temporelles (38) via le premier protocole de communication avec les modules de raccordement (14) du premier type, et dans des secondes fenêtres temporelles (40), qui restent en particulier inutilisées par le premier protocole de communication, via un second protocole de communication, possédant en particulier une largeur de bande plus élevée que le premier protocole de communication, avec des modules de raccordement (16) d'un second type, dans lequel le module de raccordement du second type est réalisé sous forme de module passerelle ("gateway)") et/ou comprend des entrées pour le raccordement de capteurs (18, 20) et/ou des sorties pour le raccordement d'actionneurs (22, 24), et il est prévu une interface de communication (34) du second module de raccordement (16), qui est capable de transférer des paquets de données vers le système de communication série (28).

8. Procédé de sécurité selon la revendication 7,
dans lequel le module de raccordement (16) du second type se branche en alternance dans les premières fenêtres temporelles (38) dans le système de communication série (28) et commute la propre communication vers un mode transparent, c'est-à-dire qu'il transmet des paquets de données sans modification vers le système de communication série (28), et se relie dans des secondes fenêtres temporelles (40) avec le module de commande (12) et interrompt ici le système de communication série (28) vers l'aval, donc en direction opposée à celle vers le module de commande (12).

9. Procédé de sécurité selon la revendication 7 ou 8 pour une rangée de modules comprenant le module de raccordement (14) du premier type et des modules de raccordement additionnels, à savoir le module de raccordement (16) du second type et d'autres modules de raccordement du second type, d'un troisième type ou d'encore un autre type, dans lequel les modules de raccordement additionnels répartissent la communication avec le module de commande (12) dans les secondes fenêtres temporelles (40) selon l'un des schémas suivants :
- les modules de raccordement additionnels utilisent une partie du système de communication série (28) à titre de propre système de communication série, qui relie tous les modules de raccordement additionnels ou des groupes partiels des modules de raccordement additionnels, et/ou
- chaque module de raccordement additionnel reçoit de manière cyclique en attribution une seconde fenêtre temporelle (40) respective, et/ou
- tous les modules de raccordement additionnels ou des groupes partiels de modules de raccordement additionnels se partagent respectivement une seconde fenêtre temporelle (40).

10. Procédé de sécurité selon la revendication 9,
dans lequel les modules de raccordement additionnels communiquent au moyen du second protocole de communication et/ou au moyen d'autres protocoles de communication.
